Europäisches Patentamt

European Patent Office

Office européen des brevets

(11) Publication number: **0 537 929 B1**

# EUROPEAN PATENT SPECIFICATION

(45) Date of publication of patent specification: **16.08.95**

(51) Int. Cl.[6]: **B01D 71/38**, B01D 71/02, B01D 67/00

(21) Application number: **92309060.9**

(22) Date of filing: **05.10.92**

(54) **Membrane and method of separation.**

(30) Priority: **07.10.91 US 772314**
**06.12.91 US 817220**

(43) Date of publication of application:
**21.04.93 Bulletin 93/16**

(45) Publication of the grant of the patent:
**16.08.95 Bulletin 95/33**

(84) Designated Contracting States:
**DE FR GB IT NL**

(56) References cited:
| | |
|---|---|
| DE-C- 2 359 505 | US-A- 4 935 144 |
| US-A- 4 961 855 | US-A- 5 004 861 |
| US-A- 5 019 262 | US-A- 5 141 649 |

(73) Proprietor: **TEXACO DEVELOPMENT CORPORATION**
**2000 Westchester Avenue**
**White Plains,**
**New York 10650 (US)**

(72) Inventor: **Pasternak, Mordechai**
**31 Pleasant Ridge Road**
**Spring Valley, NY 10977 (US)**
Inventor: **Kokturk, Uygur**
**49 Croft Road**
**Poughkeepsie, NY 12603 (US)**
Inventor: **Najjar, Mitri Salim**
**34 Relyea Terrace**
**Wappingers Falls, NY 12590 (US)**
Inventor: **Malouf, Raymond Dennis**
**97 West Willow Street**
**Beacon, NY 12508 (US)**

(74) Representative: **Green, Mark Charles et al**
**Urquhart-Dykes & Lord,**
**91 Wimpole Street**
**London W1M 8AH (GB)**

EP 0 537 929 B1

**Description**

The present invention relates to a membrane assembly. More particularly the invention relates to a membrane assembly containing a porous ceramic support bearing as a separating layer a membrane of polyvinyl alcohol cross-linked with a polyaldehyde. The invention further relates to the use of such a membrane for effecting separation of water from an aqueous composition containing organic oxygen - or nitrogen - compounds.

As well known to those skilled in the art, it is possible to remove water from mixtures thereof with organic liquids by various techniques including adsorption or distillation . These conventional processes, particularly distillation, are however, characterized by high capital cost. In the case of distillation for example the process requires expensive distillation towers, heaters, heat exchangers (reboilers, condensers) , together with a substantial amount of auxiliary equipment typified by pumps, collection vessels, vacuum generating equipment.

Such operations are characterized by high operating costs principally costs of heating and cooling - plus pumping.

Furthermore the properties of the materials being separated, as is evidenced by the distillation curves, may be such that a large number of plates may be required, etc. When the material forms an azeotrope with water, additional problems may be present which for example, may require that separation be effected in a series of steps (e.g. as in two towers) or by addition of extraneous materials to the system.

There are also comparable problems which are unique to adsorption systems.

It has been found to be possible to utilize membrane systems to separate mixtures of miscible liquids by pervaporation. In this process, the charge liquid is brought into contact with a membrane; and one component of the charge liquid preferentially permeates the membrane. The permeate is then removed as a vapor from the downstream side of the membrane - typically by reducing the pressure below the vapor pressure of the permeating species or by sweeping with a carrier gas.

Illustrative membranes which have been employed in prior art separation techniques include those set forth in the following table:

| - Polyacrylonitrile | - Neel, Aptel & Clement Desalination 53, 297 (1985) |
| - Crosslinked Polyvinyl Alcohol | - EP-A-0096339 (GFT) |

The cost effectiveness of a membrane is determined by the selectivity and productivity. Of the membranes commercially available, an illustrative membrane of high performance is that disclosed in EP-A-0 096 339.

EP-A-0096339 discloses, as cross-linking agents, diacids (typified by maleic acid or fumaric acid); dihalogen compounds (typified by dichloroacetone or 1,3-dichloroisopropanol); aldehydes, including dialdehydes, typified by formaldehyde. These membranes are said to be particularly effective for dehydration of aqueous solutions of ethanol or isopropanol.

This reference discloses separation of water from alcohols, ethers, ketones, aldehydes, or acids by use of composite membranes. Specifically the composite includes (i) a backing typically about 120 $\mu$m in thickness, on which is positioned (ii) a microporous support layer of a polysulfone or a polyacrylonitrile of about 50 $\mu$m thickness, on which is positioned (iii) a separating layer of cross-linked polyvinyl alcohol about 2 microns in thickness.

Polyvinyl alcohol may be cross-linked by use of difunctional agents which react with the hydroxyl group of the polyvinyl alcohol. Typical cross-linking agent may include dialdehydes (which yield acetal linkages), diacids or diacid halides (which yield ester linkages), dihalogen compounds or epichlorhydrin (which yield ether linkages) olefinic aldehydes (which yield ether/acetal linkages), boric acid (which yields boric ester linkages), sulfonamidoaldehydes, etc.

See also J. G. Prichard, Polyvinyl Alcohol, Basic Properties and Uses, Gordon and Breach Science Publishers, New York (1970) or

C. A. Finch, Polyvinyl Alcohol, Properties and Applications, John Wiley and Sons, New York (1973).

Also of interest is US-A-4,755,299 to GFT Ingenieurebüro für Industrieanlagenbau as assignee of H. Bruschke directed to a separation process using e.g. polysulfone bearing polyvinyl alcohol separating layer which has been cross-linked (e.g. col 2, line 66 to column 3, line 7 inter alia) by esterification with dicarboxylic acids, etherification with acids or dihalogen compounds, or acetalization by means of aldehydes or dialdehydes (note e.g. formaldehyde Ex 3).

US-A-4,802,988 which issued February 7, 1989 to Texaco as assignee of John Reale, Jr. and Craig R. Bartels is directed to separation of aqueous organic oxygenates by pervaporation with a membrane of polyvinyl alcohol which has been cross-linked with aliphatic polyaldehydes having ≧ 3 carbon atoms.

US-A-4,941,976 which issued July 17, 1991 to Texaco as assignee of Craig R. Bartels and John Reale, Jr. (a divisional of US-A-4,802,988) is directed to the membrane.

US-A-5,004,861 which issued April 2, 1991 to Texaco as assignee of Mordechai Pasternak, Craig R. Bartels, and John Reale, Jr. is directed to separation of water from a charge mixture of hydrocarbon/organic oxygenate by pervaporation through a membrane of (i) polyvinyl alcohol which has been cross-linked with aliphatic polyaldehydes having ≧ 3 carbon atoms.

US-A-4,961,855 which issued October 9, 1990 to Texaco as assignee of Craig R. Bartels and John Reale, is directed to separation of water/organic oxygenates (such as isopropanol) by pervaporation through a membrane of polyvinyl alcohol which has been cross-linked with aliphatic polyaldehydes having ≧ 3 carbon atoms.

US-A-4,935,144 which issued June 19, 1990 to Texaco as assignee of Mordechai Pasternak, Craig R. Bartels, and John Reale, Jr. is directed to separation of ketones from aqueous systems by pervaporation through a membrane of polyvinyl alcohol which has been cross-linked with aliphatic polyaldehydes having ≧ 3 carbon atoms.

US-A-4,910,344 which issued May 20, 1990 to Texaco as assignee of Mordechai Pasternak, Craig R. Bartels, and John Reale, Jr. is directed to separation of organic oxygenates from aqueous systems by pervaporation through a membrane of polyvinyl alcohol/polyacrylic acid.

US-A-4,960,519 which issued October 20, 1990 to Texaco as assignee of Mordechai Pasternak, Craig R. Bartels, John Reale, Jr. and Vatsal M. Shah is directed to separation of alcohol from organic oxygenate by pervaporation through a membrane of polyvinyl alcohol/polyacrylic acid.

US-A-4,971,699 which issued November 20, 1990 to Texaco as assignee of Craig R. Bartels is directed to separation of water/organic oxygenate by pervaporation through a membrane of polyvinyl alcohol/polyacrylic acid.

Although the above systems have been found to be successful in separating aqueous compositions of organic oxygenates at satisfactory Flux and Selectivity, it has been found that attempts to separate aqueous compositions containing liquid nitrogen-containing compounds including amines, such as ethylene diamine, have not been satisfactory. When treating such charge compositions by many of the prior art systems, it is found that the amine destroys the membrane. If a typical prior art membrane of e.g. polyethylenimine or poly(vinyl pyridine) or polyethylenimine cross-linked with toluene diisocyanate is utilized, it is found that the Selectivity is so low that the system is of little or no value. It is also to be noted that many of the prior art membrane systems, which utilize polyacrylonitrile as a porous support layer (on which the separating layer is formed), are destroyed by contact with the charge. For example contact of a membrane containing a polyvinyl alcohol separating layer on a polyacrylonitrile support layer with an 80w% aqueous solution of ethylene diamine for only 30 minutes results in a deterioration of the membrane assembly. Specifically, the polyacrylonitrile support layer of the membrane assembly deteriorates; and the assembly ceases to function as a membrane.

It is an object of this invention to provide a novel composite membrane characterised by its ability to effect separation of water from liquid organic oxygen and nitrogen-containing compounds.

The present invention is directed to a membrane assembly comprising

(i) a porous ceramic support; and mounted thereon

(ii) a non-porous separating layer of thickness of 1-10 $\mu$m of cast polyvinyl alcohol of molecular weight $\overline{M}_n$ of 20,000-200,000 which has been cross-linked (preferably in the presence of acid catalyst) with an aliphatic polyaldehyde, the mole ratio of aldehyde to vinyl alcohol being 0.05-0.30, and thereafter cured.

In accordance with certain of its other aspects, this invention is directed to a process for separating a charge aqueous composition containing organic oxygen- or nitrogen-containing compounds which comprises passing the charge into contact with a first (high pressure) side of a porous ceramic support having mounted thereon, a non-porous membrane separating layer of thickness of 1-10 microns of cast polyvinyl alcohol of molecular weight $\overline{M}_n$ of 20,000-200,000 which has been cross-linked, (preferably in the presence of acid catalyst) with a polyaldehyde, the mole ratio of aldehyde to vinyl alcohol being 0.05-0.30, and thereafter cured, a pressure drop being maintained across said non-porous membrane separating layer, the high pressure side being adjacent to the outer face of said non-porous membrane and the low pressure side being adjacent to the outer face of said porous ceramic support, whereby at least a portion of said water in said aqueous charge and a lesser portion of organic oxygen or nitrogen compounds pass by pervaporation through said non-porous separating layer and said porous ceramic support to a second (low pressure) side thereof, thereby providing a permeate on the low pressure side of said porous ceramic support comprising a lean mixture containing more water and less organic oxygen or nitrogen compounds than are present in said aqueous charge, said lean mixture being recovered in vapor phase at a pressure below the vapor pressure thereof; and a retentate on the high pressure side of said non-porous separating layer comprising a rich liquid containing less water and more organic oxygen - or nitrogen - compounds than are present in said charge.

The composite membrane assembly of this invention typically includes a multi-layer assembly which in the preferred embodiment preferably includes a porous ceramic support layer which provides inter alia mechanical strength and support to the assembly. Alumina is the preferred ceramic material.

THE POROUS SUPPORT

The porous support layer of this invention includes a porous ceramic support which may be fabricated of ceramic. Typically the ceramic support may be of alumina, silica-alumina, alumina-zirconia, alumina-titania, titania or magnesia. The preferred ceramic permeable support may be alumina, preferably alpha alumina, in the form of a disk, plate, cylinder or tube, etc.

The porous ceramic support may be one which is commercially available typified by the Mexbrex brand alpha alumina tube of Alcoa of 10 mm outside diameter, 1.5 mm wall thickness, and 250 mm length.

Another commercially available ceramic support which may be employed may be the Vicor brand of alpha alumina tube having a pore diameter of 4 nm (40Å).

The preferred porous alumina ceramic support may be characterized by a pore diameter of 2,5 nm-100 nm (25Å-1000Å), say about 100A; a surface area of 180-390m$^2$/g, say about 285 m$^2$/g°, and a porosity of typically 42-58% say 49.5%

In practice of this invention, it is possible to deposit the organic polyvinyl alcohol separating membrane directly on the porous ceramic support. Alternatively in an alternative embodiment, the organic polyvinyl alcohol separating membrane may be deposited on an inorganic gamma alumina membrane which has been deposited on the porous alpha alumina ceramic support. Such an intermediate layer is particularly suited to the separation of aqueous charge containing liquid organic oxygenate.

The inorganic membrane layers of this invention may be formed on the alumina support by use of a charge composition of aluminum hydrocarbyloxide (including inertly substituted alkoxide). Although it may be possible to prepare the novel membranes of this invention from a mono-hydrocarbyloxide $A\ell(OR)X_2$, (wherein X represents another inert group) or from a di-hydrocarbyloxide $A\ell(OR)_2X$, it is preferred to utilise, as charge, a tri-hydrocarbyloxide characterised by the formula $A\ell(OR)_3$.

In the above formula, R may be a hydrocarbon group selected from the group consisting of alkyl, aralkyl, cycloalkyl, aryl, and alkaryl including such radicals when inertly substituted. When R is alkyl, it may typically be methyl, ethyl, n-propyl, iso-propyl, n-butyl, i-butyl, sec-butyl, amyl, octyl, decyl, octadecyl, etc. When R is aralkyl, it may typically be benzyl, beta-phenylethyl, etc. When R is cycloalkyl, it may typically be cyclohexyl, cycloheptyl, cyclooctyl, 2-methylcycloheptyl, 3-butylcyclohexyl, 3-methylcyclohexyl, etc. When R is aryl, it may typically be phenyl, naphthyl, etc. When R is alkaryl, it may typically be tolyl, xylyl, etc. R may be inertly substituted i.e. it may bear a non-reactive substituent such as alkyl, aryl, cycloalky, ether, etc. Typically inertly substituted R groups may include 2-ethoxyethyl, carboethoxymethyl, 4-methylcyclohexyl, etc. The preferred R groups may be lower alkyl, i.e. $C_1$-$C_{10}$ alkyl, groups including e.g. methyl, ethyl, n-propyl, i-propyl, butyls, amyls, hexyls, octyls, decyls, etc. R may preferably be isopropyl or sec-butyl.

The preferred aluminum alkoxides are those lower aluminum alkoxides (wherein all the R groups are the same). Most preferred are aluminum tri-sec-butoxide and aluminum tri-iso-propoxide. It is preferred to utilize the lower alkoxides because they are generally liquids at temperature of operation and for economic reasons (i.e. they contain a larger relative content of alumina). Aluminum alkoxides are readily available commercially from various suppliers including Aldrich, Fisher, or Johnson Matthey.

In practice of the process of this invention, the charge e.g. $A\ell(OR)_3$ (referred to as an alkoxide, for convenience) is employed in liquid state. In the case of the higher alkoxides (typified by $A\ell(OR)_3$ wherein R is octadecyl) which are solid at operating temperature, they may be employed in admixture with an alcohol, preferably ROH i.e. wherein the R group is lower $C_1$-$C_5$ alkyl.

To the charge alkoxide (100 parts) at temperature of 100°C-250°C, say 125°C, there are added 100-500, preferably 200 parts of liquid alcohol typically a lower $C_1$-$C_5$ alkanol such as isopropanol, and 0.5-7 parts, say 1 part of acid peptizing agent. Typical acid peptizing agents may include nitric acid, oxalic acid, or sulfuric acid. The preferred acid peptizing agent may be nitric acid.

The charge alkoxide liquid, containing peptizing agent, is hydrolyzed by contact with steam at 100°C-250°C, say 126°C and 1-150 psig, say 29 psig. During reaction over 0.5-60 minutes, say 20 minutes, the aluminum alkoxide is decomposed by the steam to yield alcohol and alkoxide in which some of the alkoxide groups have been replaced by -OH groups:

$$-A1-OR\ +\ H_2O\ (g) \rightarrow -A1-OH\ +\ ROH$$

This reaction typically proceeds further to yield hydrolyzed polymer product

$$-A1-OR\ +\ RO-A1- \rightarrow -A1-0-A1-\ +\ ROR$$

The hydrolyzed product of the reaction may be considered a stabilized/peptized colloidal sol of alumina in admixture with the alcohol originally present plus that formed during reaction. The alumina may bear RO-groups on the chain or more likely in terminal position. The alumina in the sol may be characterized by x-ray diffraction and nitrogen porosimetry. The hydrolyzed alumina sol contains gamma alumina with a Pore Mode of typically 2,5-100 nm (25-1000Å), preferably 10-50 nm (100-500Å), say 20 nm (200Å) and a BET surface area of typically 180-390 $m^2$/g, typically 220-330 $m^2$/g, say 285 $m^2$/g.

Prior to formation of the alumina membrane on a support, it is desirable to prewet the support as with an alcohol ROH, preferably methanol or ethanol.

Preparation of an alumina membrane assembly from the stabilized sol may be effected by various techniques. If it be desired to coat e.g. the inside of a tubular or cylindrical microporous support, the sol in liquid phase may be steam sprayed through the tubular or cylindrical support to form thereon a membrane of alumina over 1-10, say 1.9 minutes at 50°C-200°C, say 156°C. In another embodiment, the sol may be steam treated during preparation prior to deposition e.g. on the inside of the tube of alumina.

In still another embodiment, the sol may be deposited on the support and thereon contacted with steam at desired temperature and pressure. In another embodiment, the sol (containing water) may be deposited and steam treatment may be effected by reducing the pressure to generate steam in situ. In another embodiment the stabilized sol liquid may be poured as a thin layer on a flat surface. Excess liquid may be removed by drying at 50°C-90°C, say 60°C for 12-36 hours, say 24 hours followed by calcining at 400°C-600°C, say 400°C for 24-48 hours, say 34 hours.

Supported alumina membranes may be formed by coating a thin microporous support (formed typically of alpha alumina) with the sol to attain a thin film on the surface thereof. This film-membrane may be dried at 50°C-90°C, say 60°C for 12-36 hours, say 24 hours, and then calcined at 400°C-600°C, say 400°C for 24-48 hours, say 34 hours.

In any of these embodiments, the sol-generated membrane may be formed on an intermediate layer on the support. For example, it may be desirable to have (i) a microporous support of alpha alumina, bearing (ii) an intermediate inorganic layer of e.g. gamma aluminum oxide (formed thereon e.g. by contact with an aqueous sol of alumina which is dried at 50°C-90°C, say 60°C for 12-36 hours, say 2 hours followed by calcining at 250°C-400°C, say 400°C for 24-48 hours, say 34 hours) and (iii) an organic separating membrane layer.

When desired, the deposition process may be repeated one or more additional times to obtain inorganic membranes of increasing thickness.

The inorganic membrane layer of this invention so prepared is typically characterized by a thickness of 0.5-25, say 4 microns. When an intermediate layer is present, it may be characterized by a thickness of 10-150, say 25 microns.

The inorganic membranes prepared by the process of this invention are typically characterized (by a high surface area and a narrow Pore Size Distribution) as follows:

TABLE

| Property | Broad | Narrow | Preferred |
|---|---|---|---|
| Surface Area by -Multi-point BET $m^2$/g | 180-390 | 220-330 | 285 |
| Pore Volume cc/g for: | | | |
| -Pores < 1857.2A at P/Po = 0.005<br>Pore Mode<br>Porosity % | 3.5-80<br>25-1000<br>42-58 | 20-30<br>100-500<br>46-52 | 27<br>250<br>49.5 |

## THE SEPARATING LAYER

The organic separating layer which permits attainment of separation in accordance with this invention includes a non-porous film of cross-linked polyvinyl alcohol of thickness of about 1-10 microns preferably 1-5 microns, say 1.5 microns. The layer is formed from polyvinyl alcohol which has been prepared by hydrolysis of polyvinyl acetate-typically 50-100% hydrolyzed, preferably 90-100%, say 100% hydrolyzed. The charge polyvinyl alcohol has a molecular weight of 20,000-200,000, say 88,000. Typically it may be employed as a 5-10w%, say 7w% aqueous solution. A commercially available product which may be employed is the Aldrich brand of 100% hydrolyzed polyvinyl alcohol of molecular weight of about 88,000 as 7w% aqueous solution.

It is a feature of this invention that the membrane or sheet of cross-linked polyvinyl alcohol separating layer is formed in situ on the porous support layer. This is effected by use, as a cross-linking agent, of a preferably an aliphatic dialdehyde preferably containing at least three carbon atoms. More preferably the aliphatic dialdehyde may contain 3-8, commonly 3-6 carbon atoms, most preferably 5 carbon atoms. Typical aliphatic dialdehydes which may be employed may include:

## TABLE

**Glutaraldehyde**

**2-hydroxyhexanedial – 1,6**

**malonic dialdehyde**

**succinic dialdehyde**

**hexanedial – 1,6**

The preferred aliphatic dialdehyde is glutaraldehyde. Aldehydes falling outside the scope of this invention typified by formaldehyde, glyoxal, or succinic semi aldehyde yield membranes which are characterised by less satisfactory performance. When separating organic oxygenates, performance is judged by the ability of a membrane system to give a permeate containing less than 15 w% isopropanol (from a charge containing 85w% isopropanol and 15w% water) with a flux of at least 1.5 kilograms/meter$^2$/hour(kmh) at a feed temperature of 70°C and with a permeate pressure of 5 mmHg and a condenser cooled by liquid nitrogen). Compositions falling outside the scope of this invention may be characterized by unsatisfactory selectivity or unsatisfactory productivity or both.

In situ cross-linking may be carried out by casting 5-10w%, say 7w% aqueous solution of polyvinyl alcohol which contains the aliphatic dialdehyde cross-linking agent. The mole ratio of cross-linking agent to polyvinyl alcohol may be 0.05-0.30, say 0.2.

Cross-linking is carried out, in the presence of acid catalyst, preferably inorganic acid. Sulfuric acid is preferred. The mole ratio of acid to aldehyde may be 0.1-0.3, say 0.2.

The composite membrane may then be cured in an oven at 100°C-150°C, say 125°C for 1-30 minutes, say 15 minutes to yield a polyvinyl alcohol film having a thickness of 1-10 microns, say 1.5 microns.

It will be found that, when viewed in cross-section , the typical composite membrane assembly includes a support layer of porous ceramic support bearing thereon a 1.5 micron layer of polyvinyl alcohol ($\overline{M}_n$ of 88,000) which has been cross-linked with glutaraldehyde in the presence of sulfuric acid and then cured at 125 °C. It appears that the separating layer of polyvinyl alcohol penetrates into the pores of the porous ceramic support; and this undoubtedly contributes to the bonding between the layer and the support.

In one preferred embodiment, the structure may include a conduit or tube of porous ceramic, preferably alpha alumina. Preparation of the assembly of this invention may include coating the outside (or more preferably the inside) of this tube with the e.g. 5-10w% aqueous solution containing the polyvinyl alcohol ($\overline{M}_n$ of 20,000-200,000) preferably containing e.g. glutaraldehyde in mole ratio of cross-linking agent to polyvinyl alcohol of 0.05-0.3, say 0.2 and sulfuric acid in mole ratio of acid to aldehyde of 0.1-0.3, say 0.2 at ambient temperature of 20°C-30°C, say 25°C. The solution may remain in contact with the alumina for 10-20 minutes, say 15 minutes and then is poured off.

Preferably a solution of polyvinyl alcohol and e.g. glutaraldhyde is pumped through the tube for 10-20, say 15 minutes; and thereafter the tube is filled with acid for 10-20 say 15 minutes. Curing is effected at 100°-150 °C to yield a film of 1-10, say about 1.5 $\mu$m thickness.

In another embodiment, a porous layer of gamma alumina, of pore size of 1-15 nm (10-150Å), say 2,5 nm (25Å) may be deposited on the ceramic support (and cured at 371-649°C (700°F-1200°F), say 427°C (800°F) for 1-24 hours, say 18 hours) prior to deposition thereon of the polyvinyl alcohol separating layer.

The tube so prepared, together with a plurality of other tubes so prepared, is fitted,within a shell (in manner comparable to a shell-and-tube heat exchanger) provided with an inlet at one end and an outlet at the other. A baffle-like seal between the inner surface of the shell and the outer surface prevents fluid from bypassing the operative membrane system and insures that fluid enters the system principally at one end. The charge passes from the feed channel, into contact with the separating layer and thence therethrough, and is withdrawn as permeate.

In operation, the charge liquid is admitted to the tube side and passes through the inside of the tubes and exits as retentate. During passage through the tubes, permeate passes through the non-porous separating layer and permeate is collected in the shell side.

Alternatively a honeycomb configuration may be employed.

PERVAPORATION

It is a feature of the non-porous polyvinyl alcohol separating layer that it is found to be particularly effective when used in a pervaporation process. In pervaporation, a charge liquid containing a more permeable and a less permeable component is maintained in contact with a non-porous separating layer; and a pressure drop is maintained across that layer. The charge liquid dissolves into the membrane and diffuses therethrough. The permeate which passes through the membrane and exits as a vapor may be recovered by condensing at low temperature or alternatively may be swept away by use of a moving stream of gas. Preferably, the permeate side of the membrane is maintained at a low pressure, typically 5 mm.Hg.

For general background on pervaporation, note U.S. Pat. Nos. 4,277,344; 4,039,440; 3,926,798; 3,950,247; 4,035,291; etc.

It is a feature of the process of this invention that the membrane may be useful in pervaporation processes for dewatering aqueous solutions of liquid organic nitrogen compounds typified by amines and nitriles.

Typical amines may include:

<u>**TABLE**</u>

| | |
|---|---|
| ethylene | diamine |
| n-propyl | amine |
| n-butyl | amine |
| diethylene | triamine |
| triethylene | tetramine |
| aniline | |

Typical heterocyclic amines may include:

<u>**TABLE**</u>

pyridine

morpholine

pyrimidine

Typical nitriles may include:

## TABLE

**acetonitrile**

**acrylonitrile**

**propionitrile**

**benzonitrile**

A typical charge may contain 50-99w%, say 80w% aqueous solution of ethylene diamine (EDA).

It is a further feature of this invention that the novel membrane may be particularly useful in pervaporation processes for dewatering aqueous solutions of alcohols such as ethanol, isopropanol, etc. or of aqueous solutions of glycols containing at least two hydroxy groups on a carbon backbone, typified by glycols such as ethylene glycol, propylene glycol, butylene glycols, triols including glycerine, glycol ethers including diethylene glycol and triethylene glycol.

A typical charge may contain 50-99w%, say 85w% aqueous solution of isopropanol or of ethylene glycol.

In practice of the pervaporation process of this invention, the charge aqueous solution at 40°C-120°C, say 70°C may be passed into contact with the non-porous separating layer of the membrane of this invention. A pressure drop of about one atmosphere is commonly maintained across the membrane. Typically, the feed or charge side of the membrane is at about atmospheric pressure and the permeate or discharge side of the membrane is at a pressure of about 267-6665 $N/m^2$ (2-50 mmHg) preferably 267-2667 $N/m^2$ (2-20 mmHg), say 667 $N/m^2$ (5 mm.Hg).

The permeate which passes through the membrane and the supporting structure includes water and a small proportion of the, e.g. ethylene diamine, isopropanol or glycol from the charge liquid. Typically for organic oxygenates the permeate contains 88-98, say 97w% water. Permeate is recovered in vapor phase.

Pervaporation may typically be carried out at a flux of 0.1-5, say 2 kilograms per square meter per hour $(k/(m^2.h))$. Typically, the units may have a selectivity (measured in terms of w% water in the permeate during pervaporation at 70°C of an 85% aqueous solution of isopropanol through a standard polyvinyl alcohol separating layer of 2 microns thickness) of 97w% water for organic oxygenates, a Selectivity (measured in terms of w% water in the permeate during pervaporation at 70°C of an 80w% aqueous solution of ethylene diamine) of ca. 50-60w% water.

## EXAMPLES

The invention will now be further illustrated by the following non-limiting Examples. Comparative examples are asterisked.

## EXAMPLE I

In this example, the porous ceramic support is a tube (10 mm outside diameter, 1.5 mm wall thickness, and 250 mm length) of the Alcoa Membralox brand alpha alumina tube containing particles of diameter of about 20-60 nm (200-600Å), say 40 nm (400Å) and pores of diameter of about 10 nm (100Å).

The separating layer is formed from a coating solution containing 20g of 7w% polyvinyl alcohol ($\overline{M}_n$ of 88,000) in water to which is added 25w% of glutaraldehyde in mole ratio of glutaraldehyde to polyvinyl alcohol of about 0.2. This solution is continuously pumped through the tube for 15 minutes. There is then pumped through the tube 0.05 N aqueous sulfuric acid in mole ratio of acid to glutaraldehyde of 0.2. After 15 minutes, the membrane is cured at 125°C for 30 minutes.

To this membrane assembly, there is charged aqueous solution containing 85w% isopropanol. Pervaporation at charge pressure of atmospheric pressure and permeate pressure at 5 mmHg is carried out over 22 days at 70°C. The permeate contains 97.3w% water and the Flux is 3.37 kmh.

EXAMPLE II

In this Example, the procedure of Example I is followed except that the coating solution is admitted into the tube and allowed to stand for 15 minutes. It is then poured off and the acid/glutaraldehyde mixture is admitted and allowed to stand for 15 minutes. This membrane is then cured at 125 °C for 30 minutes.

The Selectivity is found to be 91w% (water in the permeate) and the Flux is 2.87 kmh.

EXAMPLE III*

In this control Example III*, the procedure for preparing the membrane is that set forth in Example I of US-A-4,961,855. The membrane includes a polyester carrier layer, a polysulfone (PS) support layer, and a polyvinyl alcohol separating layer.

The Selectivity is 99w% and the Flux is 1.0 kmh.

EXAMPLE IV*

In this Control Example IV*, the procedure for preparing the membrane is that set forth in Example I of EP-A-0096339 (GFT). The membrane includes a polyester carrier layer, a polyacrylonitrile (PAN) support layer, and a polyvinyl alcohol separating layer.

The Selectivity is 97.2w% and the Flux is 0.28 kmh.

TABLE

| Example | Membrane | Selectivity (% Water Permeate) | Flux kmh |
|---------|----------|-------------------------------|----------|
| I | PVA/A1$_2$0$_3$ | 97.3 | 3.37 |
| II | PVA/A1$_2$0$_3$ | 91 | 2.87 |
| III* | PVA/PS | 99 | 1.0 |
| IV* | PVA/PAN | 97.2 | 0.28 |

From the above Table, it is apparent that practice of the process of this invention permits attainment of desirably high Selectivity at high Flux. In particular, the Flux is 3-12 times that of the Control Examples.

EXAMPLES V-IX

In this series of Examples, the procedure of Example I is duplicated except that the concentration of isopropanol (IPA) in the isopropanol/water charge is varied.

TABLE

| Example | Feed (w% Water) | Selectivity (% Water in Permeate) | Flux (kmh) |
|---------|-----------------|-----------------------------------|------------|
| V | 11 | 82.6 | 1.62 |
| VI | 14 | 89.9 | 2.95 |
| VII | 16 | 91 | 2.87 |
| VIII | 17 | 89.9 | 3.14 |
| IX | 21 | 88.2 | 3.78 |

From the Table it is apparent that satisfactory Selectivity at high Flux may be attained.

Results comparable to those of Example I may be attained if the porous ceramic support is:

TABLE

| Example | Porous Ceramic Support |
|---------|------------------------|
| X | Zirconia - Alumina |
| XI | Silica - Alumina |

Results comparable to those attained in Example I maybe attained if the charge aqueous liquid is:

TABLE

| Example | Charge |
|---------|--------|
| XII | 85 w% ethylene glycol |
|  | 15 w% water |
| XIII | 95 w% acetone |
|  | 5 w% water |
| XIV | 98 w% methyl ethyl ketone |
|  | 2 w% water |

### EXAMPLE XV

In this Example, the porous ceramic support is a tube (10 mm outside diameter, 1.5 mm wall thickness, and 250 mm length) of the Alcoa Membralox brand alpha alumina tube (described supra.) of pore size (at the inner surface) of about 10 nm (100Å).

The separating layer is formed from a coating solution containing 20g of 7w% polyvinyl alcohol ($\overline{M}_n$ of 88,000) in water to which is added an aqueous 25w% solution of glutaraldehyde in mole ratio of glutaraldehyde to polyvinyl alcohol of about 0.2. This solution is continuously pumped through the tube for 15 minutes. There is then added to the tube 0.05 N aqueous sulfuric acid in mole ratio of acid to glutaraldehyde of 0.2. After 15 minutes the acid is withdrawn, and the membrane is cured at 125°C for 30 minutes.

To the inside of the tube of this membrane assembly, there is charged aqueous solution containing 76.7w% ethylene diamine. Pervaporation at charge pressure of atmospheric pressure and permeate pressure at 5 mm Hg is carried out over 22 days at 70°C. The permeate contains (Selectivity) 60.8w% water and the Flux is 2.1 kmh.

### EXAMPLE XVI*

In this Example, the procedure of Example XV is followed except that the membrane tested is a film of unsupported polyvinyl alcohol. The charge contains 83w% ethylene diamine and 17w% water. The Selectivity is 53.9w% and the Flux is 1.7 kmh.

This film, however, lacks mechanical stability and is it difficult to handle because of the absence of any support.

### EXAMPLE XVII*

In this Control Example, the procedure of Example XV is followed except that the separating layer is a layer of polyethylenimine of $\overline{M}_n$ of 60,000. Charge contains 79.9w% ethylene diamine/20.1w% water. Initially the Selectivity is 32.6w% and the Flux is 9.8 kmh.

It is observed, however, that after 24 hours, the Selectivity and Flux drop substantially.

### EXAMPLE XVIII*

In this Control Example, the procedure of Example XVII* is followed except that there is no support - only a layer of polyethylenimine as in Example XVII* and it is not on a ceramic support. Charge contains 82.6w% ethylene diamine and 17.4w% water. The Selectivity is 31.5w% and the Flux is 4.8 kmh. Selectivity and Flux drop substantially after 24 hours.

EXAMPLE XIX*

In this Control Example, the procedure of Example XV is followed except that the separating layer is a membrane of polyethylenimine ($\overline{M}_n$ of 60,000) which has been cross-linked with toluene diisocyanate. Essentially no separation is attained.

EXAMPLE XX-XXI

In these Examples, the procedure of Example XV is repeated except for the concentration of charge.

| Example Charge % EDA | Selectivity % water in Permeate | Flux kmh |
|---|---|---|
| XX 74.6 | 57.2 | 3.1 |
| XXI 78.1 | 59.5 | 1.6 |

EXAMPLE XXII* - XXVI*

In these Control Examples, each of the following putative support materials, as a membrane, is immersed in an aqueous solution of 80% ethylene diamine.

TABLE

| Example | Support Layer |
|---|---|
| XXII* | - Polysulfone |
| XXIII* | - Polyvinylidenedifluoride |
| XIX* | - Polybenzimidazol |
| XXV* | - Polyamide |
| XXVI* | - Polyacrylonitrile |

In each of Example XXII* - XXVI*, the membrane is attacked by the amine and fails to maintain the necessary structural integrity after about several hours contact with the ethylene diamine.

Results comparable to those of Example XV may be attained if the charge is an aqueous composition containing:

TABLE

| Example | Nitrogen Compound |
|---|---|
| XXVII | n-propyl amine |
| XXVIII | n-butyl amine |
| XXIX | aniline |
| XXX | diethylene triamine |
| XXXI | triethylene tetramine |
| XXXII | pyridine |
| XXXIII | morpholine |
| XXXIX | acrylonitrile |
| XXXV | propionitrile |
| XXXVI | benzonitrile |

## Claims

1.  A membrane assembly comprising a porous ceramic support having mounted thereon a non-porous separating layer of thickness 1-10 $\mu$m of cast polyvinyl alcohol of molecular weight $\overline{M}_n$ of 20,000-200,000 which has been cross-linked.

2.  A membrane assembly as claimed in Claim 1 wherein said cross-linking is effected with a polyaldehyde.

3.  A membrane as claimed in Claim 2 wherein said polyaldehyde is a $C_3$-$C_8$ aliphatic dialdehyde.

4.  A membrane assembly as claimed in any one of Claims 1 to 3 wherein said porous ceramic support comprises alpha alumina.

5.  A membrane assembly as claimed in Claim 4 wherein said alpha alumina contains pores of diameter of 2,5 nm-100 nm (25Å-1000Å).

6.  A membrane assembly as claimed in any one of Claims 1 to 5 further comprising a layer of gamma alumina on the ceramic support.

7.  A method of forming a membrane assembly which comprises
    maintaining a porous ceramic support bearing a surface containing a surface layer of pores;
    depositing on said surface and in said surface layer of pores, polyvinyl alcohol thereby forming a surface layer of polyvinyl alcohol interlocked in said surface layer of pores of said porous ceramic support;
    cross-linking said surface layer of polyvinyl alcohol, interlocked in said surface layer of pores of said porous alumina ceramic support, thereby forming a cross-linked non-porous layer on said porous alumina ceramic support; and
    curing said cross-linked non-porous layer.

8.  A process for separating a charge aqueous composition comprising organic oxygen- or nitrogen-containing compounds which comprises passing the charge into contact with a membrane assembly as claimed in any one of Claims 1 to 6, a pressure drop being maintained across said non-porous membrane separating layer, the high pressure side being adjacent to the outer face of said non-porous membrane and the low pressure side being adjacent to the outer face of said porous ceramic support whereby at least a portion of said water in said aqueous charge and a lesser portion of organic oxygen or nitrogen compounds pass by pervaporation through said non-porous separating layer and said porous ceramic support to a second (low pressure) side thereof, thereby providing a permeate on the low pressure side of said porous ceramic support comprising a lean mixture containing more water and less organic oxygen or nitrogen compounds than are present in said aqueous charge, said lean mixture being recovered in vapor phase at a pressure below the vapor pressure thereof; and a retentate on the high pressure side of said non-porous separating layer comprising a rich liquid containing less water and more organic oxygen - or nitrogen - compounds than are present in said charge.

9.  A process as claimed in Claim 8 wherein the organic oxygen containing compound is an alcohol or a ketone.

10. A process as claimed in Claim 8 wherein the organic nitrogen-containing compound is an amine or aniline.

## Patentansprüche

1.  Ein Membranaufbau, der einen porösen keramischen Träger umfaßt, der darauf angebracht eine nicht-poröse Trennschicht mit einer Dicke von 1-10 $\mu$m aus gegossenem Polyvinylalkohol mit einer relativen Molekülmasse $\overline{M}_n$ von 20.000-200.000 aufweist, der vernetzt worden ist.

2.  Ein Membranaufbau nach Anspruch 1, wobei besagte Vernetzung mit einem Polyaldehyd bewirkt wird.

EP 0 537 929 B1

3. Eine Membran nach Anspruch 2, wobei besagtes Polyaldehyd ein $C_3$-$C_8$-aliphatisches Dialdehyd ist.

4. Ein Membranaufbau nach einem der Ansprüche 1 bis 3, wobei besagter poröser keramischer Träger alpha-Aluminiumoxid umfaßt.

5. Ein Membranaufbau nach Anspruch 4, wobei besagtes alpha-Aluminiumoxid Poren mit einem Durchmesser von 2,5 nm-100 nm (25 Å-1.000 Å) enthält.

6. Ein Membranaufbau nach einem der Ansprüche 1 bis 5, der außerdem eine Schicht aus gamma-Aluminiumoxid auf dem keramischen Träger umfaßt.

7. Ein Verfahren zur Herstellung eines Membranaufbaus, welches umfaßt
Erhalten eines porösen keramischen Trägers, der eine Oberfläche trägt, die eine Oberflächenschicht aus Poren enthält;
Abscheiden von Polyvinylalkohol auf besagter Oberfläche und in besagter Oberflächenschicht aus Poren, wodurch eine Oberflächenschicht aus Polyvinylalkohol gebildet wird, die verzahnt ist in besagter Oberflächenschicht aus Poren und besagtem porösen keramischen Träger;
Vernetzen besagter Oberflächenschicht aus Polyvinylalkohol, die in besagter Oberflächenschicht aus Poren und besagtem porösen Aluminiumoxid-Keramikträger verzahnt ist, wodurch eine vernetzte nicht-poröse Schicht auf besagtem porösen Aluminiumoxid-Keramikträger gebildet wird; und
Aushärten besagter vernetzten nicht-porösen Schicht.

8. Ein Verfahren zur Trennung einer wäßrigen Chargenzusammensetzung, die organische sauerstoff- oder stickstoffhaltige Verbindungen umfaßt, welches umfaßt, daß die Charge in Kontakt mit einem Membranaufbau nach einem der Ansprüche 1 bis 6 geleitet wird, wobei ein Druckabfall über besagte nicht-poröse Membran-Trennschicht gehalten wird, die Hochdruckseite an die Außenfläche besagter nicht-porösen Membran angrenzt und die Niederdruckseite an die Außenfläche besagten porösen keramischen Trägers angrenzt, wodurch wenigstens ein Teil von besagtem Wasser in besagter wäßrigen Charge und ein geringerer Teil von organischen Sauerstoff- oder Stickstoffverbindungen durch Pervaporation durch besagte nicht-poröse Trennschicht und besagten porösen keramischen Träger zu einer zweiten (Niederdruck)-Seite desselben hindurchgehen, wodurch ein Permeat auf der Niederdruckseite besagten porösen keramischen Trägers bereitgestellt wird, das eine magere Mischung umfaßt, die mehr Wasser und weniger organische Sauerstoff- oder Stickstoffverbindungen enthält, als in besagter wäßrigen Charge vorhanden sind, wobei besagte magere Mischung in Dampfphase bei einem Druck unterhalb des Dampfdruckes derselben gewonnen wird; und ein Retentat auf der Hochdruckseite besagter nicht-porösen Trennschicht, das eine reiche Flüssigkeit umfaßt, die weniger Wasser und mehr organische Sauerstoff- oder Stickstoffverbindungen enthält, als in besagter Charge vorhanden sind.

9. Ein Verfahren nach Anspruch 8, wobei die organische sauerstoffhaltige Verbindung ein Alkohol oder ein Keton ist.

10. Ein Verfahren nach Anspruch 8, wobei die organische stickstoffhaltige Verbindung ein Amin oder Anilin ist.

**Revendications**

1. Montage de membrane comprenant un support céramique poreux sur lequel est montée une couche séparatrice non poreuse d'une épaisseur de 1 à 10 $\mu$m d'un alcool polyvinylique coulé d'une masse moléculaire $\overline{M}_n$ de 20 000 à 200 000 qui a été réticulé.

2. Montage de membrane selon la revendication 1, dans lequel cette réticulation est effectuée avec un polyaldéhyde.

3. Montage de membrane selon la revendication 2, dans lequel ce polyaldéhyde est un dialdéhyde aliphatique en $C_3$-$C_8$.

4. Montage de membrane selon l'une quelconque des revendications 1 à 3, dans lequel ce support céramique poreux comprend de l'alumine alpha.

13

**5.** Montage de membrane selon la revendication 4, dans lequel cette alumine alpha contient des pores d'un diamètre de 2,5 nm à 100 nm (25 Å à 1000 Å).

**6.** Montage de membrane selon l'une quelconque des revendications 1 à 5, comprenant en outre une couche d'alumine gamma sur le support céramique.

**7.** Procédé de formation d'un montage de membrane qui comprend

le fait de maintenir un support céramique poreux portant une surface contenant une couche superficielle de pores ;

le fait de déposer sur cette surface et dans cette couche superficielle de pores, de l'alcool polyvinylique, formant ainsi une couche superficielle d'alcool polyvinylique imbriquée dans cette couche superficielle de pores de ce support céramique poreux ;

le fait de réticuler cette couche superficielle d'alcool polyvinylique, imbriquée dans cette couche superficielle de pores de ce support céramique d'alumine poreux, en formant ainsi une couche non poreuse réticulée sur ce support céramique d'alumine poreux ; et

le fait de durcir cette couche non poreuse réticulée.

**8.** Procédé pour séparer une charge formée d'une composition aqueuse comprenant des composés oxygénés ou azotés organiques, qui comprend le fait de faire passer la charge au contact d'un assemblage de membrane tel que revendiqué dans l'une quelconque des revendications 1 à 6, une chute de pression étant maintenue à travers la couche séparatrice de membrane non poreuse, le côté haute pression étant adjacent à la face externe de la membrane non poreuse et le côté basse pression étant adjacent à la face externe du support céramique poreux, de sorte qu'au moins une partie de l'eau présente dans la charge aqueuse et une partie moindre des composés oxygénés ou azotés organiques traverse par pervaporation la couche séparatrice non poreuse et le support céramique poreux jusqu'a un second côté (basse pression) de celui-ci, fournissant ainsi un perméat sur le côté basse pression du support céramique poreux comprenant un mélange pauvre contenant davantage d'eau et moins de composés oxygénés ou azotés organiques qu'il n'y en a dans la charge aqueuse, ce mélange pauvre étant recueilli en phase vapeur sous une pression inférieure à sa tension de vapeur ; et un rétentat du côté haute pression de cette couche séparatrice non poreuse comprenant un liquide riche contenant moins d'eau et davantage de composés oxygénés ou azotés organiques qu'il n'y en a dans la charge.

**9.** Procédé selon la revendication 8, dans lequel le composé oxygéné organique est un alcool ou une cétone.

**10.** Procédé selon la revendication 8, dans lequel le composé azoté organique est une amine ou l'aniline.